# EUROPEAN PATENT SPECIFICATION

(11) **EP 1 150 102 B1**
(45) Date of publication and mention of the grant of the patent: **27.09.2006**
(21) Application number: 01303710.6
(22) Date of filing: 24.04.2001
(51) Int. Cl.: G01D 9/00, G06F 17/40

(54) **Analyzer**
Analysegerät
Analyseur

(30) Priority: 28.04.2000 JP 2000130828
(43) Date of publication of application: 31.10.2001
(73) Proprietor: SII NanoTechnology Inc., Chiba-shi, Chiba 261-8507 (JP)
(72) Inventor: Sone, Yuya, c/o Seiko Instruments Inc., Chiba-shi, Chiba (JP)
(74) Representative: Sturt, Clifford Mark

(56) References cited:
- EP-A- 0 595 552
- EP-A- 1 045 361
- US-A- 5 305 081
- US-A- 5 953 009
- US-A- 6 004 276

## Description

The present invention relates to an analyzer.

With an analyzer, various analyzer information is required when carrying out measurement or analysis. For example, in a thermal analyzer for measuring variations in material of a sample from variations in temperature, the following types of analysis information are required when performing measurement.
- A temperature program in which temperature control and measurement data sampling interval for a furnace, being a sample, are set.
- Sample information in which a name and shape value (size, weight) of a sample are set.
- Various constants used in device calibration

Measurement is carried out after these items of analyzer information have been set to appropriate values by an operator according to a sample to be measured and the purpose of measurement. By making it possible for once set analyzer information to be retained in a file or the like, it is also possible to carry out measurement by reading previously set analyzer information from the file.

The above described related art has the following problems.
- There is no means for confirmation with a procedure in which set contents of analyzer information is small.

With the analyzer of the related art, in order to verify analyzer contents currently being set, it is necessary to carry out verification by opening the place where analyzer information is set, for example, a setting window. Also, if the analyzer information being saved in a file or the like is not read out once from the analyzer, it is not possible to verify the contents. Analyzer information that becomes necessary for measurement such as the temperature program used at the time of thermal analyzer measurement, is also verified a lot of times, and operations such as opening a setting window each time this is done is extremely annoying to an operator.

This annoying operation can not be ignored in the field where the analyzer is used. Because the analyzer is extremely expensive, it is common for a single device to be used by many operators. There are also cases where a device administrator creates analyzer information, and a number of operators use this created analyzer information to carry out the respective analysis they are responsible for. That is, there are numerous cases where a plurality of items of analyzer information are commonly used in the field the analyzer is used, or where analysis is carried out in a manner allotted according to the purpose. For this reason, analyzer information is created successively, and so basically the numerous items of analyzer information increase even more. When sharing the analyzer information, to find out necessary analyzer from within the large amount of analyzer information means for verification of the intended use of the analyzer information is required in only a few procedures.

However, in the analyzer of the related art there are hardly any devices having means for verification of the intended use of the analyzer information etc. In order to make it possible to ascertain the intended use, there are also devices having means for affixing comments, but nevertheless these comments can not be verified unless the setting window is opened up, as described above. Because of this annoyance, in fields where analyzers are being shared, the intended use of the analyzer and the like impose an unnecessary burden on an operator who is already conveying a lot of information such as by oral reporting or in documents.

The present invention is intended to solve the above described problems, and makes it possible to verify set contents of analyzer information in a few procedures by providing an analyzer having means for holding information about intended use of analyzer information in association with the analyzer information, and automatically displaying the information being held simply upon selection of analyzer information by an operator. Further, unnecessary load on a user, due to numerous applications, such as management means for large amounts of information or information transmission means in the case where analyzer information is shared by a lot of people, is reduced by having internal functions in an analyzer in which the contents of displayed information can be freely edited by an operator.

EP 0595552 discloses an analyser for a data processing system. During analysis, signals are displayed by the analyser. During recording of measurement data from an instrument or console to be analysed, or during playback of such a recording, a user is permitted to mark an event in a real time graph of the recorded data by clicking a mouse button. The user may subsequently add an annotation to that marked event.

US 6004276 discloses a clinical information reporting system that receives physiological signals from a patient and demographic information for the patient and generates a report containing both sets of information. A user may edit header and interpretation sections of the report after measurement.

US 5305081 discloses a bottle stress analysis system in which a polarisation value is calculated for each measured point around a bottle. This data is saved in a data file along with other information, including comments.

The present invention has been developed to solve the above problems, and the main parts of a structure to do this are user interface means, analyzer information, analyzer information storage means, analyzer information display means, comment creation means, analyzer information selection means, selection sensing means and comment display means.

According to an aspect of the present invention, there is provided an analyzer, for carrying out measurement of characteristics of a sample, and analysis of measurement data, comprising:
user interface means for handling input from an operator and output to an operator;
analyzer information storage means for storing analyzer information;
wherein the analyzer information is made up of measurement information used at the time of measurement, analysis information used at the time of analysis, and comments corresponding to the measurement information and the analysis information;
analyzer information display means for visually displaying analyzer information on the user interface means;
comment creation means enabling an operator to create and edit comments for the analyzer information through the user interface means;
analyzer information selection means enabling an operator to select arbitrary analyzer information from among a plurality of items of analyzer information being displayed by the user interface means;
selection sensing means for notifying of detection of the operator selecting, or intending to select, arbitrary analyzer information using the analyzer information selection means; and
comment display means, for receiving notification from the selection sensing means, extracting a comment corresponding to a selected item of analyzer information from the analyzer information storage means and displaying the comment on the user interface means.

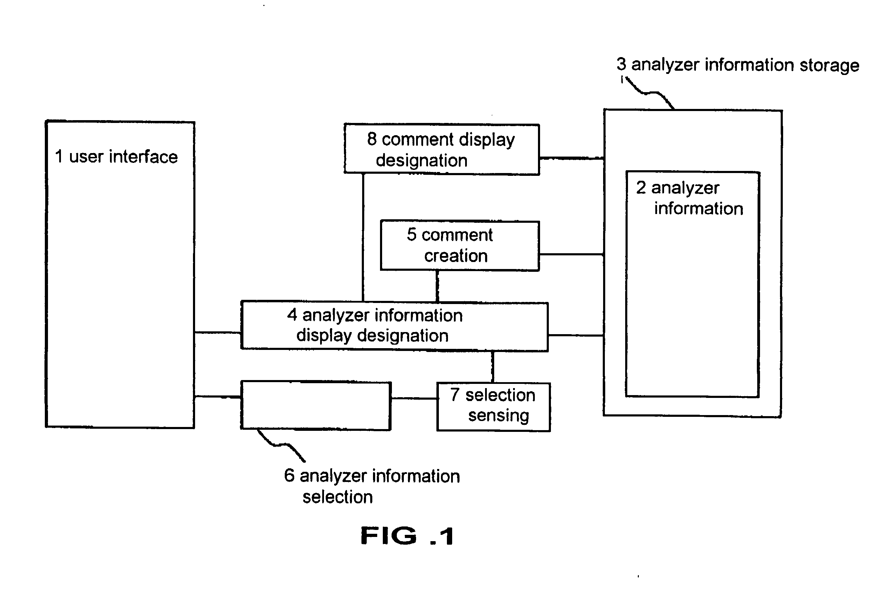

Embodiments of the present invention will now be described by way of further example only and with reference to the accompanying drawings, in which:-
Fig. 1 is a schematic drawing of an embodiment of the present invention.
Fig. 2 is a software block diagram of an embodiment of the present invention.
Fig. 3 is an algorithm of an analyzer information selection routine of the embodiment of the present invention.
Fig. 4 is an algorithm of an analyzer display routine of the embodiment of the present invention.
Fig. 5 is an example of visual display of analyzer information in the embodiment of the present invention using icons.
Fig. 6 is an example of analyzer information selection in the embodiment of the present invention.
Fig. 7 is an algorithm of a comment creation routine of the embodiment of the present invention
Fig. 8 is an algorithm of a comment display routine of the embodiment of the present invention
Fig. 9 is an example of comment display in the embodiment of the present invention.
Fig. 10 is drawing explaining operation of the embodiment of the present invention.
Fig. 11 is drawing explaining operation of the embodiment of the present invention.
Fig. 12 is drawing explaining operation of the embodiment of the present invention.
Fig. 13 is drawing explaining operation of the embodiment of the present invention.

The present invention will now be described with a thermal analyzer as an illustrative example. A thermal analyzer is constructed of a personal computer, provided with an input device such as a keyboard or mouse for receiving input from an operator and an output device such as a CRT for performing output to a user, and a measuring device, for carrying out measurement of sample material, connected to the personal computer using a communication line such as a network or serial communication.

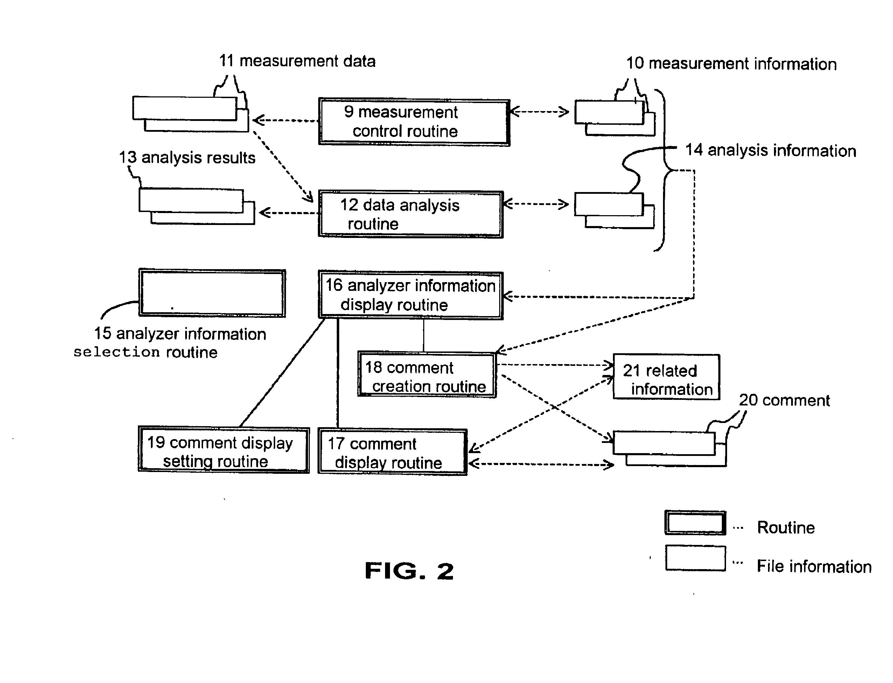

The present invention is partially realized as thermal analyzer system software installed in the personal computer. Fig. 2 is a block diagram of this thermal analyzer system software.

A measurement control routine 9 carries out control of the measurement device, and saves measurement data transmitted from the measurement device. In order for the measurement control routine 9 to perform control of the measurement device, measurement information is required. Before measurement commences, the operator performs setting of measurement information through a setting window displayed on the CRT. Alternatively, measurement information already saved as a file is selected in a selection window and read into the measurement control routine 9. A temperature program, sample information and various constants necessary for device calibration are contained in the measurement information 10. If the operator outputs a commence measurement command, the measurement control routine 9 sends control instructions to the measurement device according to set measurement information, receives measurement data sent from the measurement device and saves the data as a measurement data file 11.

A data analysis routine 12 performs analysis of the measurement data file 11, and saves analysis results. In the data analysis routine 12, an operator selects an arbitrary measurement data file 11 by means of the selection window displayed on the CRT, and this data file is read into the data analysis routine 12. The data analysis routine 12 holds various methods for data correction and data analysis, and the operator designates an arbitrary method and data analysis is performed. At the time of analysis, analysis information is required and the operator sets the analysis information using the setting window. Alternatively, analysis information 14 already saved as a file is selected in a selection window and read into the data analysis routine 12. The analysis information 14 contains correction coefficients, and constants used in the analysis methods. Analysis results computed by the data analysis routine 12 are displayed on the CRT, and saved as an analysis results file 13.

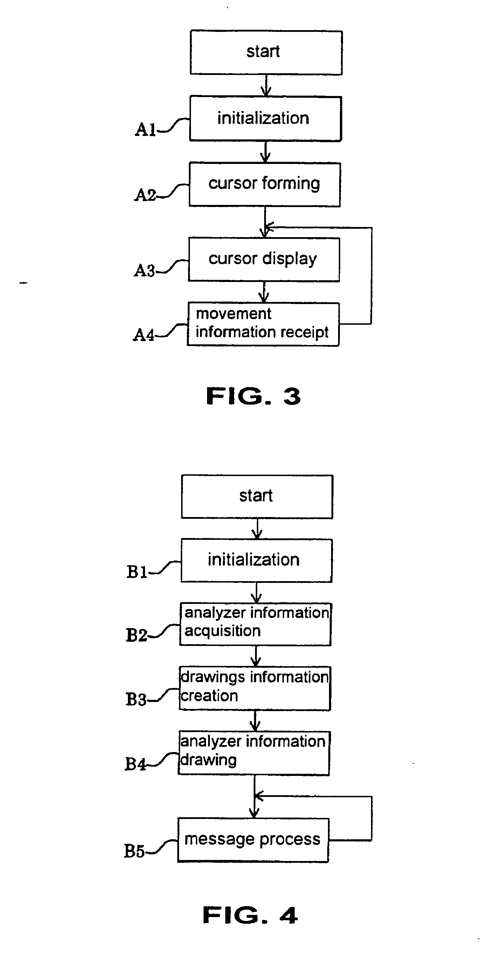

An analyzer information selection routine 15 presents a cursor for selecting analyzer information visually displayed using the analyzer information display routine 16 (an algorithm is shown in Fig. 3). After an initialization process A1, cursor information is created using a cursor creation process A2, and a cursor is displayed on the CRT using the cursor display process A3. If the operator moves a mouse, a movement coordinate for the cursor is calculated from an amount of movement of the mouse using a movement information receiving process A4. In this way, an operator can operate the cursor using the mouse. In this embodiment, a cursor is used, but any method can be used as long as there is means for designating and displaying analyzer information visually.

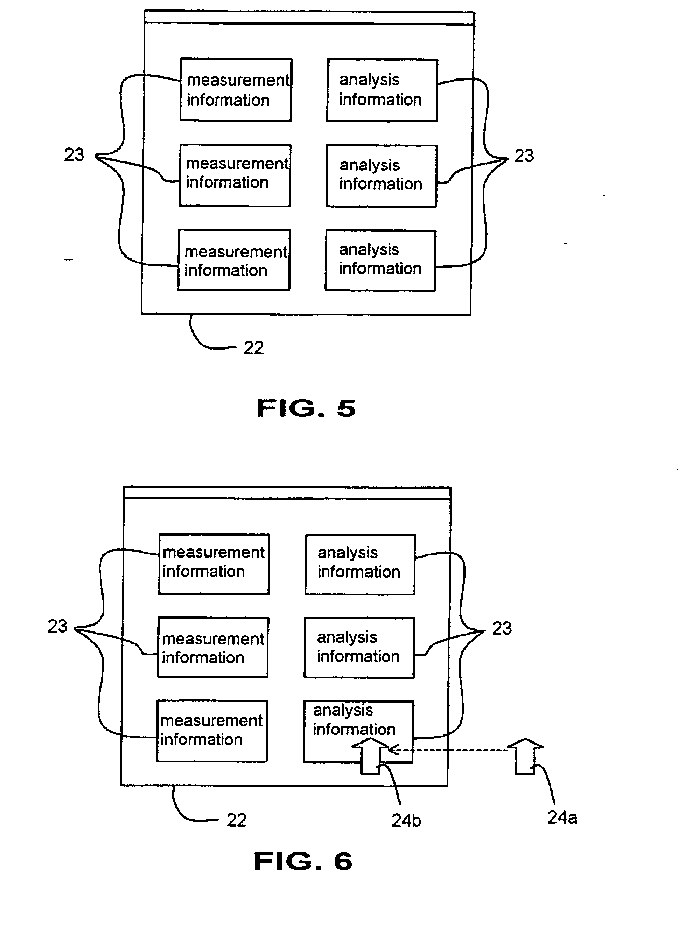

An analyzer information display routine 16 visually displays analyzer information such as measurement information 10 and analysis information 14, creates comments and displays the created comments (an algorithm is shown in Fig. 4). Once the analyzer information display routine 16 is launched by a command from the operator, after an initialization routine B1a list of currently existing measurement data 10 and analysis information 14 is created by an analyzer information acquisition process B2. Then, drawing information for displaying analyzer information as an icon is created by a drawing information creation process B3, and a window 22 having an array of icons 23, as shown in Fig. 5, is drawn on the CRT by an analyzer information drawing process B4. After drawing has been carried out, processing enters a message process loop B5 for the window. In the message process B5, message processing for notifying of events such as "the mouse has been moved in the window", "a mouse button has been clicked in the window" etc, is sent from the operating system. Message processing for the window is already well known technology in, for example, operating systems such as Microsoft Windows.

Because of the analyzer information display routine 16, the operator can verify the existence of analyzer information at a glance using the displayed icons. In the embodiment, analyzer information is visually displayed using icons, but any form of display is possible as long as it is possible to visually display, for instance, buttons or a list of analyzer information file names.

An operator can select an arbitrary analyzer information icon being displayed by the analyzer information display routine, by operating the cursor presented by the analyzer information selection routine. Also, if an analyzer information icon is dragged and dropped into the main window of the measurement control routine 9 or a main window of the data analysis routine 12, this analyzer information can be used as set information. The concept of drag and drop is widely known using functions supported by operating systems.

In Fig. 6, If the cursor is moved from the cursor 24a to the cursor 24b, so that it then lies over the analyzer information icon 23, an on-mouse event is generated in the analyzer information display routine 16. An on-mouse event is an event notifying that the cursor has been moved into an own drawing region. If an on-mouse event is generated, the analyzer information display routine 16 calls a comment display routine 17 in the message process B5. Further, if the operator positions the mouse on the analyzer information icon and clicks the right button of the mouse, the analyzer information routine 16 generates a mouse right button click event. If this happens, the analyzer information display routine 16 displays a pop-up menu in the message process B5. If the operator then selects a "create comment" item from the plurality of menu items, the analyzer information display routine calls the comment creation routine 18. Also, if the operator selects a "comment display setting" item from the menu items, the analyzer information display routine 16 calls a comment display setting routine 19.

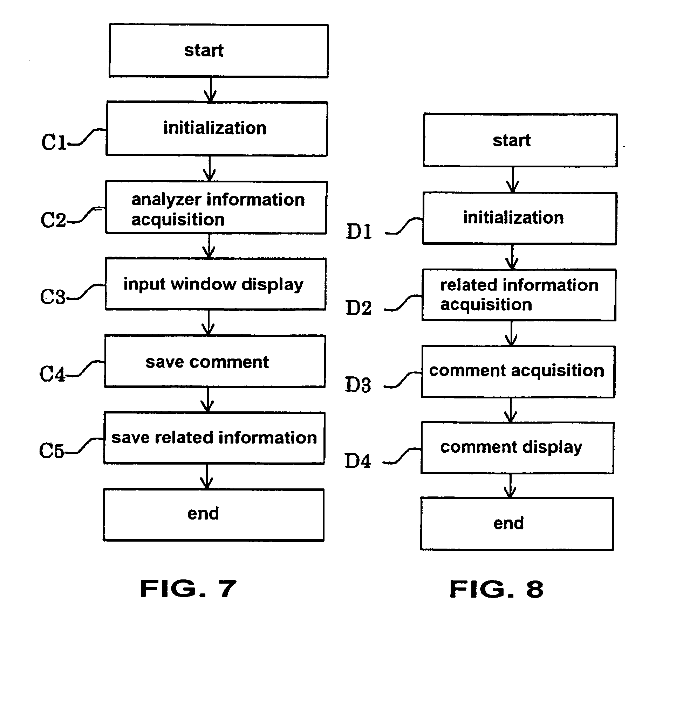

The comment creation routine 18 is for creating and editing comments 20 for the analyzer information (an algorithm is shown in Fig. 7). After an initialization process C1, the comment creation routine recognizes what analyzer information has been selected using the analyzer information acquisition process C2, and displays an input window for input of comments for the selected analyzer information using an input window display process C3. The operator inputs a number of lines of comment 20, such as the intended use of the analyzer information, or transmission points for switching. If the input window is closed, the input comments 20 are saved by the comment save process C4, and related information indicating the type of comment 20 corresponding to the type of analyzer information is saved by the related information saving process C5. In the embodiment, the analyzer information and the comments 20 are held independently, and the relationship of their correspondence is managed by the related information 21,

but any configuration is possible as long as the correspondence relationship of the analyzer information and the comments 20 can be ascertained.

The comment display setting routine 19 is for setting with respect to comments 20 for the analyzer information. A setting window is displayed, and whether to continuously display comments or not display them when an on-mouse event is generated can be selected by the operator.

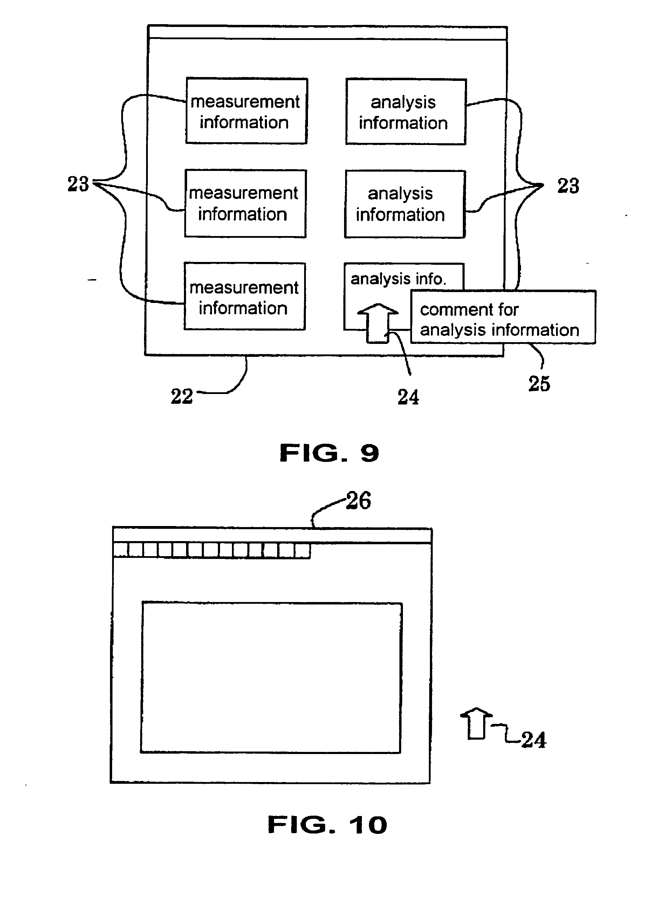

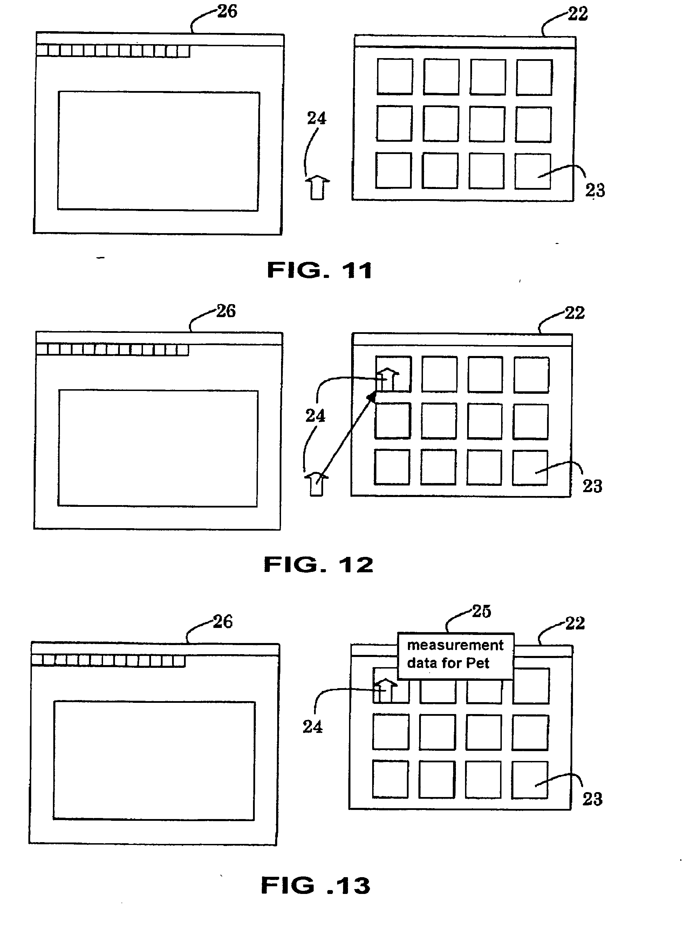

The comment display routine 17 is for displaying comments 20 for the selected analyzer information (an algorithm is shown in Fig. 8). After an initialization process D1, the comment display routine 17 refers to related information 21 using a related information acquisition process D2, and acquires a relation between the analyzer information and the comments. The comment 20 corresponding to the selected analyzer information is then read using a comment acquisition process D3. If setting to carry out continuous display of the comment is made in the comment display setting routine 19, the comment 25 is displayed in the form of a pop-up menu as shown in Fig. 9. In this way the operator can recognize what the contents of the of analyzer information are at a glance using the displayed comment 25.
The embodiment is ultimately a method of recognizing analyzer information in a thermal analyzer using the present invention. For example, in the case where an arbitrary item of analyzer information is found from among a few tens of items of analyzer information and measurement performed, the following procedure is adopted. First of all, the operator launches a measurement control routine. A main window 26 of the measurement control routine is displayed on the CRT, as shown in Fig. 10 (the cursor 24 is continuously displayed). Next, the operator launches an analyzer information display routine. As shown in Fig. 11, the window 22 is displayed on the CRT, and a list of current analyzer information items is displayed in this window as icons 23. As shown in Fig. 12, the operator moves the cursor 24 to position the cursor over the analyzer information icon. As a result, as shown in Fig. 13, a comment 25 indicating the content of the analyzer information of the icon 23 where the cursor is positioned is automatically displayed. The operator can recognize if the analyzer information is what they are looking for by looking at the displayed comment 25. Even if there are a few tens of items of analyzer information, it is possible to recognize the contents by slowly dragging the cursor over the icons 23, which means that it is possible to find necessary analyzer information quickly. If analyzer information is found, it is possible to complete analyzer information setting by simply dragging and dropping the icon for that analyzer information into main window of the measurement control routine. The operator can then commence measurement.

In order to recognize analyzer contents in a thermal analyzer of the related art, it was necessary to open a setting window for the analyzer information from a main window of a measurement control routine, then open an analyzer information selection dialog box from that window to select the analyzer information, and to read the analyzer information into the setting window and display that information. Since a procedure must be carried out involving opening the selection dialog box, selecting the analyzer information and then closing the selection dialog box, there are a lot of operations required to recognize the content of a plurality of items of analyzer information compared to the present invention.

As described above, the present invention provides a mechanism whereby an operator can create arbitrary comments for analyzer information, and it is possible to automatically display created comments simply by moving a cursor over a visual display of the analyzer information, such as icons. It thus becomes possible for an operator to recognize contents of a large amount of analyzer information with a few procedures.

In an analyzer, to recognize contents of a large amount of analyzer information with a few procedures, a software structure having the following features is used: user interface means 1 for handling input and output for an operator, analyzer information 2 made up of measurement information and analysis information, and comments corresponding to the measurement information and the analysis information, analyzer information storage means 3 for storing analyzer information, analyzer information display designation means 4 for visually displaying analyzer information, comment creation means 5 enabling creation and editing of comments for the analyzer information, analyzer information selection means 6 enabling selection of arbitrary analyzer information from among a plurality of items of analyzer information being displayed, selection sensing means 7 for notifying of detection of arbitrary analyzer information using the analyzer information selection means 6, and comment display designation means 8 for receiving notification from the selection sensing means 7, and displaying a comment corresponding to selected analyzer information.

## Claims

1. An analyzer, for carrying out measurement of characteristics of a sample, and analysis of measurement data, comprising:
user interface means for handling input from an operator and output to an operator
analyzer information storage means for storing analyzer information;
wherein the analyzer information is made up of measurement information used at the time of measurement, analysis information used at the time of analysis, and comments corresponding to the measurement information and the analysis information;
analyzer information display means for visually displaying analyzer information on the user interface means;
comment creation means enabling an operator to create and edit comments for the analyzer information through the user interface means;
analyzer information selection means enabling an operator to select arbitrary analyzer information from among a plurality of items of analyzer information being displayed by the user interface means;
selection sensing means for notifying detection of the operator selecting, or intending to select, arbitrary analyzer information using the analyzer information selection means; and
comment display means, for receiving notification from the selection sensing means, extracting a comment corresponding to a selected item of analyzer information from the analyzer information storage means and displaying the comment on the user interface means.

2. The analyzer of claim 1, wherein the comment display means is also capable of not displaying comments even if notification is received from the selection sensing means, due to operator setting.

3. The analyzer of claim 1, wherein the analyzer information is made up of a plurality of measurement information items used at the time of measurement and a plurality of analysis information items used at the time of analysis, and a plurality of comments according to the measurement and analysis information items, and also contains association information for maintaining a correspondence relationship between the measurement information and the analysis information, and the comments.

4. The analyzer of claim 1, further comprising comment storage means for storing created comments;
wherein the analyzer information display means comprises icon display means for displaying analyzer information visually as an icon on the user interface means;
wherein the analyzer information selection means comprises a cursor that can be operated by an operator through the interface means;
wherein the selection sensing means comprises cursor sensing means for sensing and notifying when an operator operates the cursor and positions the cursor over an arbitrary icon; and
wherein the comment display means is for receiving notification from the cursor sensing means, extracting the content of a comment corresponding to an icon over which the cursor is positioned from the comment storage means and displaying the comment on the user interface means.

## Patentansprüche

1. Analysegerät zur Ausführung einer Messung von Eigenschaften einer Probe und zur Analyse von Messdaten, umfassend:
ein Benutzerschnittstellenmittel zum Bearbeiten eines Eingangs von einem Operator und eines Ausgangs zu einem Operator;
ein Analysegerät-Informationsspeichermittel zum Speichern von Analysegerät-Informationen;
wobei die Analysegerät-Informationen aus Messinformationen, die zum Zeitpunkt der Messung verwendet werden, Analyseinformationen, die zum Zeitpunkt der Analyse verwendet werden, und Kommentaren, die den Messinformationen und den Analyseinformationen entsprechen, bestehen;
ein Analysegerät-Informationsanzeigemittel zum visuellen Anzeigen von Analysegerät-Informationen auf dem Benutzerschnittstellenmittel;
ein Kommentarerstellungsmittel, das einem Operator ermöglicht, Kommentare für die Analysegerät-Informationen durch das Benutzerschnittstellenmittel zu erstellen und zu bearbeiten;
ein Analysegerät-Informationswählmittel, das einem Operator ermöglicht, beliebig Analysegerät-Informationen aus mehreren Punkten von Analysegerät-Informationen zu wählen, die von dem Benutzerschnittstellenmittel angezeigt werden;
ein Auswahlerfassungsmittel zum Benachrichtigen, wenn erfasst wird, dass der Operator unter Verwendung des Analysegerät-Informationswählmittels beliebig Analysegerät-Informationen wählt oder beabsichtigt, diese zu wählen; und
ein Kommentaranzeigemittel zum Empfangen der Benachrichtigung von dem Auswahlerfassungsmittel, Ermitteln eines Kommentars, der dem gewählten Punkt den Analysegerät-Informationen entspricht, aus dem Analysegerät-Informationsspeichermittel, und Anzeigen des Kommentars auf dem Benutzerschnittstellenmittel.

2. Analysegerät nach Anspruch 1, wobei das Kommentaranzeigemittel auch imstande ist, aufgrund einer Operator-Einstellung keine Kommentare anzuzeigen, selbst wenn eine Benachrichtigung von dem Auswahlerfassungsmittel empfangen wird.

3. Analysegerät nach Anspruch 1, wobei die Analysegerät-Informationen aus einer Mehrzahl von Messinformationspunkten bestehen, die zum Zeitpunkt der Messung verwendet werden, und einer Mehrzahl von Analyseinformationspunkten, die zum Zeitpunkt der Analyse verwendet werden, und einer Mehrzahl von Kommentaren, die den Mess- und Analyseinformationspunkten entsprechen, und auch Zuordnungsinformationen enthalten, um ein Entsprechungsverhältnis zwischen den Messinformationen und den Analseinformationen und den Kommentaren aufrecht zu erhalten.

4. Analysegerät nach Anspruch 1, des Weiteren umfassend ein Kommentarspeichermittel zum Speichern erstellter Kommentare;
wobei das Analysegerät-Informationsanzeigemittel ein Piktogramm-Anzeigemittel zum visuellen Anzeigen von Analysegerät-Informationen als Piktogramm auf dem Benutzerschnittstellenmittel enthält;
wobei das Analysegerät-Informationswählmittel einen Cursor umfasst, der von einem Operator durch das Schnittstellenmittel bedient werden kann;
wobei das Auswahlerfassungsmittel ein Cursorerfassungsmittel zum Erfassen und Benachrichtigen umfasst, wenn ein Operator den Cursor bedient und den Cursor über einem beliebigen Piktogramm positioniert; und
wobei das Kommentaranzeigemittel zum Empfangen einer Benachrichtigung von dem Cursorerfassungsmittel, Ermitteln des Inhalts eines Kommentars, der einem Piktogramm entspricht, über dem der Cursor positioniert ist, von dem Kommentarspeichermittel, und Anzeigen des Kommentars auf dem Benutzerschnittstellenmittel dient.

## Revendications

1. Analyseur pour effectuer la mesure des caractéristiques d'un échantillon, et l'analyse des données de mesure, comprenant :
un moyen d'interface utilisateur pour traiter les entrées provenant d'un opérateur et les sorties à l'attention d'un opérateur ;
un moyen d'enregistrement des informations de l'analyseur, pour enregistrer les informations de l'analyseur ;
les informations de l'analyseur étant formées par des informations de mesure utilisées au moment des mesures, d'informations d'analyse utilisées au moment des analyses, et des commentaires correspondants aux informations de mesure et aux informations d'analyse;
un moyen d'affichage des informations de l'analyseur, pour afficher visuellement les informations de l'analyseur au niveau du moyen d'interface utilisateur ;
un moyen de création de commentaires, permettant à un opérateur de créer et éditer des commentaires pour les informations de l'analyseur par l'intermédiaire du moyen d'interface utilisateur ;
un moyen de sélection des informations de l'analyseur, permettant à un opérateur de sélectionner arbitrairement des informations de l'analyseur parmi une pluralité de données élémentaires d'informations de l'analyseur affichées par le moyen d'interface utilisateur;
un moyen de détection de la sélection, pour la notification de la détection de l'opérateur qui sélectionne, ou qui a l'intention de sélectionner, des informations de l'analyseur de manière arbitraire en utilisant le moyen de sélection des informations de l'analyseur ; et
un moyen d'affichage des commentaires, pour recevoir une notification du moyen de détection de la sélection, extraire un commentaire correspondant à une donnée élémentaire d'informations de l'analyseur sélectionnée à partir du moyen d'enregistrement des informations de l'analyseur et pour afficher le commentaire au niveau du moyen d'interface utilisateur.

2. Analyseur selon la revendication 1, où le moyen d'affichage des commentaires est également capable de ne pas afficher les commentaires même si l'on reçoit une notification provenant du moyen de détection de la sélection, en raison d'un paramétrage de l'opérateur.

3. Analyseur selon la revendication 1, où les informations de l'analyseur sont formées par une pluralité de données élémentaires d'informations de mesure utilisées au moment de la mesure, et par une pluralité de données élémentaires d'informations d'analyse utilisées au moment de l'analyse, et par une pluralité de commentaires en fonction des données élémentaires des informations de mesure et d'analyse, et contiennent également de l'information d'association pour maintenir une relation de correspondance entre les informations de mesure et les informations d'analyse, et les commentaires.

4. Analyseur selon la revendication 1, comprenant par ailleurs un moyen d'enregistrement des commentaires, pour enregistrer les commentaires créés;
le moyen d'affichage des informations de l'analyseur comprenant un moyen d'affichage d'icônes pour afficher des informations de l'analyseur de manière visuelle en tant qu'icônes au niveau du moyen d'interface utilisateur ;
le moyen de sélection des informations de l'analyseur comprenant un curseur pouvant être actionné par un opérateur grâce au moyen d'interface;
le moyen de détection de la sélection comprenant un moyen de détection du curseur pour la détection et la notification lorsqu'un opérateur actionne le curseur et positionne le curseur sur une icône arbitraire; et le moyen d'affichage des commentaires servant à recevoir une notification du moyen de détection du curseur, à extraire le contenu d'un commentaire correspondant à une icône sur laquelle le curseur est positionné à partir du moyen d'enregistrement des commentaires, et à afficher les commentaires au niveau du moyen d'interface utilisateur.
